# EUROPEAN PATENT SPECIFICATION

(11) **EP 2 688 240 B1**
(45) Date of publication and mention of the grant of the patent: **06.05.2020**
(21) Application number: 11861085.6
(22) Date of filing: 15.11.2011
(51) Int. Cl.: H04J 3/06, H04L 1/16, H04J 3/14

(54) **METHOD, SYSTEM AND DEVICE FOR SWITCHING AND SELECTING CLOCK SOURCE DEVICE**
VERFAHREN, SYSTEM UND VORRICHTUNG ZUM UMSCHALTEN UND AUSWÄHLEN EINER TAKTQUELLENVORRICHTUNG
PROCÉDÉ, SYSTÈME ET DISPOSITIF DE COMMUTATION ET DE SÉLECTION DE DISPOSITIF D'HORLOGE SOURCE

(30) Priority: 17.03.2011 CN 201110064679
(43) Date of publication of application: 22.01.2014
(73) Proprietor: ZTE Corporation, Shenzhen, Guangdong 518057 (CN)
(72) Inventor: WANG, Bin, Shenzhen Guangdong 518057 (CN); LIU, Dongjia, Shenzhen Guangdong 518057 (CN)
(74) Representative: Ligi, Stefano
(86) International application number: PCT/CN2011/082211
(87) International publication number: WO 2012/122813

(56) References cited:
- EP-A1- 1 601 124
- WO-A1-2010/149045
- CN-A- 101 207 606
- CN-A- 101 234 018
- CN-A- 101 873 243
- CN-A- 102 123 024
- US-A1- 2009 290 511
- SU W ET AL: "TIME-DIFFUSION SYNCHRONIZATION PROTOCOL FOR WIRELESS SENSOR NETWORKS", IEEE / ACM TRANSACTIONS ON NETWORKING, IEEE / ACM, NEW YORK, NY, US, vol. 13, no. 2, 1 April 2005 (2005-04-01), pages 384-397, XP001227425, ISSN: 1063-6692, DOI: 10.1109/TNET.2004.842228
- "IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24 July 2008 (2008-07-24), pages c1-269, XP017604130, ISBN: 978-0-7381-5400-8

## Description

### TECHNICAL FIELD

The disclosure relates to the field of communication technology, and in particular to a method, device and system for clock source device selecting and switching.

### BACKGROUND

A Precision Time Protocol PTP, namely, IEEESTD1588 protocol, is one of important techniques in the field of time and frequency synchronization control. The 1588 protocol stipulates that if each device receives two or more announce messages from a certain clock source device within four consecutive announce message sending cycles, then the clock source device is considered to be stable. A clock slave device generally records five such clock source devices as backup sources, and then selects, from the five clock source devices, the clock source device having the highest priority as the clock source device of the current system clock through a Best Master Clock Algorithm BMC. When a time period for announce message receiving expires, the clock slave device determines that a link between the clock slave device and the clock source device goes wrong, and switches to the best one in the backup clock source devices immediately.

In an actual network application, when an announce message is received, it only proves that downlink transmission between the clock slave device and the clock source device is normal, but cannot ensure that uplink transmission between the clock slave device and the clock source device is normal. In the case of partial failure of the network, this may result in a case that although in the downlink direction, a clock source device having the highest priority can be selected according to an announce message receiving condition, uplink transmission to this clock source device may actually be impeded. Moreover, even if another clock source devices is available in the network, the clock slave device will keep trying to connect the clock source device having the highest priority according to priorities determined by the announce message receiving condition, such that the clock slave device can never lock a clock source device.

Whether in an End-to-End E2E mode or a Peer-to-Peer P2P mode, the problem of long-time failure to connect and lock a clock source device by the clock slave device will occur to such a device of unidirectional link. When the network nearby an individual device goes wrong, the phenomenon may cause spread of a local problem to the whole network, such that a clock slave device can never lock a clock source device. Therefore, determining the availability of a clock source device merely by the announce message receiving condition will cause the problem that the clock slave device cannot connect to the clock source device, thus causing interruption of communication in the network, and will cause a reduced accuracy in determining the availability of a clock source device, greatly increasing a risk in an application of an actual network environment using the 1588 protocol.

It is noted that US 2009/0290511 A1 discloses a system including a first cluster having multiple first wireless nodes. One first node is configured to act as a first cluster master, and other first nodes are configured to receive time synchronization information provided by the first cluster master. The system also includes a second cluster having one or more second wireless nodes. One second node is configured to act as a second cluster master, and any other second nodes configured to receive time synchronization information provided by the second cluster master. The system further includes a manager configured to merge the clusters into a combined cluster. One of the nodes is configured to act as a single cluster master for the combined cluster, and the other nodes are configured to receive time synchronization information provided by the single cluster master.

It is also noted that EP 1601124 A1 discloses an apparatus for synchronizing clocks of network nodes (10) in a communication network (8) comprising time selection means (1) adapted for comparing a priority assigned to a clock of a first node to a priority assigned to a clock of a second node and, based on the result of the comparison of the priorities, for determining a reference clock having a superior priority and a dependent clock having an inferior priority from the clocks of the first and second node; and clock management means (2) adapted for setting the time of the dependent clock to the time indicated by the reference clock.

It is further noted that the article by SU W ET AL entitled TIME-DIFFUSION SYNCHRONIZATION PROTOCOL FOR WIRELESS SENSOR NETWORKS, published in IEEE / ACM TRANSACTIONS ON NETWORKING, IEEE / ACM, vol. 13, no. 2, 1 April 2005 (2005-04-01), pages 384-397, ISSN: 1063-6692, DOI: 10.1109/ TNET.2004.842228 discloses that in the near future, small intelligent devices will be deployed in homes, plantations, oceans, rivers, streets, and highways to monitor the environment. These devices require time synchronization, so voice and video data from different sensor nodes can be fused and displayed in a meaningful way at the sink. Instead of time synchronization between just the sender and receiver or within a local group of sensor nodes, some applications require the sensor nodes to maintain a similar time within a certain tolerance throughout the lifetime of the network. The Time-Diffusion Synchronization Protocol (TDP) is proposed as a network-wide time synchronization protocol. It allows the sensor network to reach an equilibrium time and maintains a small time deviation tolerance from the equilibrium time. In addition, it is analytically shown that the TDP enables time in the network to converge. Also, simulations are performed to validate the effectiveness of TDP in synchronizing the time throughout the network and balancing the energy consumed by the sensor nodes.

### SUMMARY

Embodiments of the disclosure provides a method, device and system for clock source device selecting and switching, to solve the problem existing in the prior that an available clock source device cannot possibly be selected due to an impeded uplink passage of a clock source device when a clock source device is selected and switched to.

The features of the methods, devices, system and computer program products according to the present invention are defined in the independent claims, and the preferable features according to the present invention are defined in the dependent claims.

The beneficial effects of the disclosure are as follows.

In the method, device, and system for clock source device selecting and switching provided by the embodiments of the disclosure, when a clock slave device receives an announce message from a clock source device, the clock slave device may send a link detection message to the clock source device to detect whether the uplink is normal. Only when it is determined, according to a detection feedback message returned by the clock source device, that the uplink communication is normal, the clock source device will be taken as a valid clock source device; and after it is further determined that the downlink communication is stable, the valid clock source device may be taken as a backup clock source device to be selected and switched to. It is ensured by means of handshake and through a link detection-feedback mechanism that both the uplink and the downlink between a clock source device and a clock slave device are normal, thus avoiding a clock source device with an impeded link being selected and avoiding affecting the normal clock synchronization of the clock slave device. A solution of an embodiment of the disclosure does not require a lot of network resource expense; and with minimal resource expense, it can be ensured that in case of an abnormal condition such as a unidirectional link and the like in the network, the clock slave device is able to correctly select a master device or select another synchronization mode without a direct result of a wrong choice of a time source, thus ensuring proper synchronization of the clock slave device.

### BRIEF DESCRIPTION OF THE DRAWINGS

The drawings illustrated here are intended to provide further understanding to the disclosure, and constitute a portion of the disclosure. Illustrative embodiments of the disclosure and description thereof are used to explain the disclosure instead of constituting improper restriction to the disclosure. In the drawings:
Fig. 1 is a schematic diagram of a structure of a system for clock source device selecting and switching according to an embodiment of the disclosure;
Fig. 2 is a schematic flowchart of a method for clock source device selecting and switching according to an embodiment of the disclosure; and
Fig. 3 is a schematic diagram of a structure of a device for clock source device selecting and switching according to an embodiment of the disclosure.

### DETAILED DESCRIPTION

In order to make the technical problem to be solved, the technical solution and beneficial effects of the disclosure clearer and easier to understand, the disclosure is further elaborated below with reference to the drawings and embodiments. It should be understood that the specific embodiments described here are only intended to interpret the disclosure instead of limiting the disclosure.

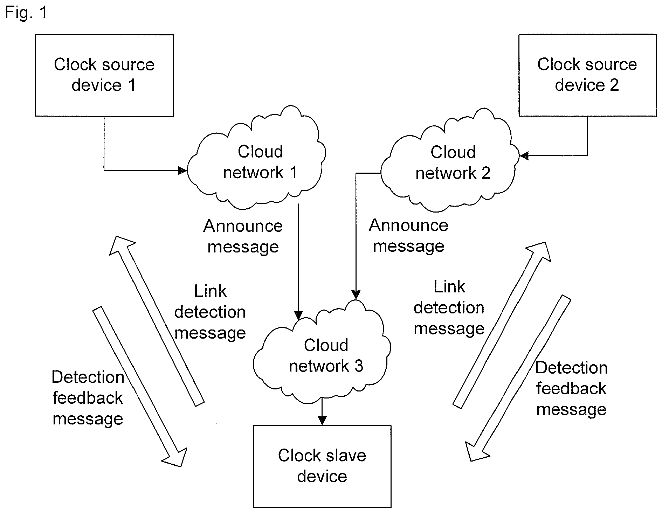

An embodiment of the disclosure provides a method for clock source device selecting and switching for a device performing time and frequency synchronization using the 1588 clock synchronization protocol, wherein when a clock slave device connects to a clock source device, the clock slave device determines the validness of the clock source device so as to correctly select a clock source device. The method implements two-way communication link detection through a detection-feedback mechanism between the clock slave device and the clock source device, so as to ensure the validness of the clock source device selected by the clock slave device. A structure of a system implementing the method for clock source device selecting and switching is as shown in Fig. 1. The system includes a clock slave device and a clock source device.

As shown in Fig. 1, take as an example a system including one clock slave device and two clock source devices (a clock source device 1 and a clock source device 2). The clock source device 1 communicates with the clock slave device via a cloud network 1 and a cloud network 3, and the clock source device 2 communicates with the clock slave device via a cloud network 2 and the cloud network 3. Wherein, the clock source devices may be clock source devices using the Precision Time Protocol, i.e., the 1588 protocol, and the clock slave device is a clock slave device using the Precision Time Protocol, i.e., the 1588 protocol.

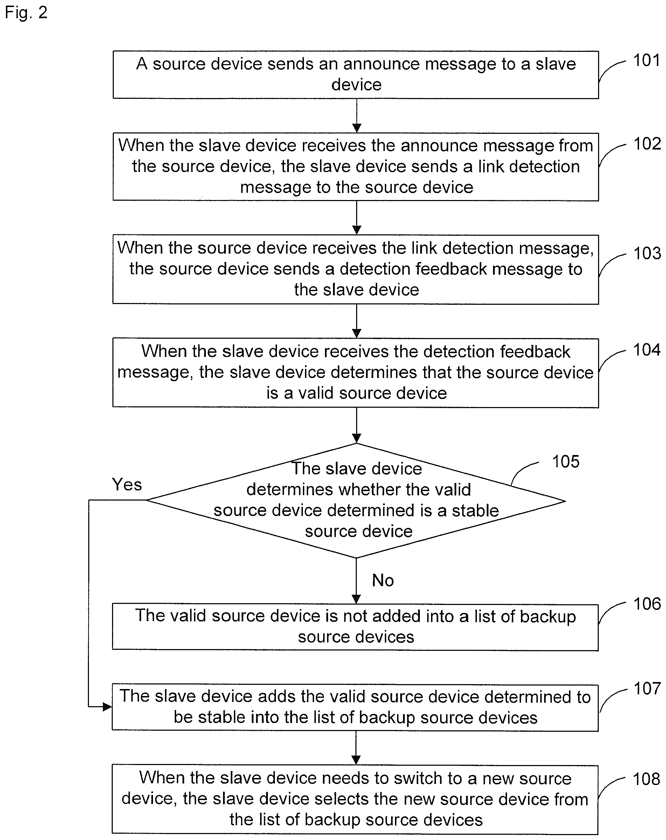

A flowchart of a method for clock source device selecting and switching provided by an embodiment of the disclosure is as shown in Fig. 2, the method including the following steps:
Step 101: A clock source device sends an announce message to a clock slave device.

For example, the system shown in Fig. 1 is a network including two clock sources, namely, a master clock source and a backup clock source, where both the clock source device 1 and the clock source device 2, as the clock sources, will sends an announce message to the clock slave device. Wherein, the announce message sent by the clock source device 1 reaches the clock slave device via the cloud network 1 and the cloud network 3, and the announce message sent by the clock source device 2 reaches the clock slave device via the cloud network 2 and the cloud network 3. The clock slave device can, according to a clock source priority determined by the BMC, select one of the two clock source devices 1, 2 as the master clock source device, and take the other clock source device as a backup clock source device in selecting and switching.

Step 102: When the clock slave device receives the announce message from the clock source device, the clock slave device sends a link detection message to the clock source device.

When the clock slave device receives the announce message from the clock source device for the first time, the clock slave device begins to send the link detection message to the clock source device in a unicast or multicast mode according to a set detection period, wherein the sent link detection message includes address information of the clock slave device itself and address information of the clock source device. The set detection period according to which the clock slave device sends the link detection message to the clock source device may either be the same as or be different from the period of sending the announce message.

With the example shown in Fig. 1, after receiving the announce messages of the clock source device 1 and the clock source device 2, the clock slave device sends a link detection message respectively to the clock source device 1 and the clock source device 2.

Step 103: When the clock source device receives the link detection message, the clock source device sends a detection feedback message to the clock slave device.

When receiving the link detection message from the clock slave device, the clock source device feeds a detection feedback message back to the clock slave device to inform the clock slave device of a normal link between the clock source and slave devices. Specifically, when the clock source device determines, according to address information of the clock source device included in the link detection message, that the link detection message is a link detection message directed to the clock source device itself, the clock source device sends the detection feedback message to the clock slave device corresponding to address information of the clock slave device included in the link detection message, wherein the sent detection feedback message includes the address information of the clock slave device and the address information of the clock source device itself. If the clock source device does not receive the link detection message, the clock source device will not send the detection feedback message. The clock source device may also send the detection feedback message in a unicast or multicast mode to inform the clock slave device of reception of the link detection message from the clock slave device as well as of a normal uplink.

The clock source device may determine, according to the address information of the clock source device in the link detection message, whether the link detection message is a link detection message directed to the clock source device so as to allow matching, and thus allow discarding a message that does not belong to the clock source device itself. The matching is important especially for a link detection message sent in the multicast mode.

As with the example shown in Fig. 1, when receiving a link detection message, the clock source device 1 and the clock source device 2 return a detection feedback message to the clock slave device, respectively.

Step 104: When the clock slave device receives the detection feedback message, the clock slave device determines that the clock source device is a valid clock source device.

When receiving the detection feedback message fed back by the clock source device according to the link detection message, the clock slave device deems that both the uplink and downlink between the clock slave device itself and the clock source device are normal, that is, the clock source device is a valid clock source device. Specifically, the clock slave device receives the detection feedback message, and acquires the address information of the clock slave device and the address information of the clock source device included in the detection feedback message; when the included address information of the clock slave device and the included address information of the clock source device matches the address information of the clock slave device and the address information of the clock source device in the link detection message sent by the clock slave device itself, the clock slave device determines that the clock source device is a valid clock source device and may serve as a time source of the clock slave device.

When the clock slave device does not receive any detection feedback message fed back by a clock source device within a set feedback expiration time, the clock slave device deems that the uplink between the clock source device and the clock slave device itself is abnormal possibly due to the clock source device being offline or due to a network failure. In this case, the clock source device is unavailable, and is not a valid clock source device that may serve as the time source of the clock slave device.

As to the example shown in Fig. 1, if the clock slave device receives a detection feedback message fed back by the clock source device 1, then the clock source device 1 is a valid clock source device; if the clock slave device does not receive a detection feedback message fed back by the clock source device 2, then the clock source device 2 is not deemed as a valid clock source device.

Step 105: The clock slave device determines whether the determined valid clock source device is a stable clock source device; if yes, Step 107 is executed; otherwise Step 106 is executed.

The clock slave device takes a clock source device both the uplink and downlink of which are normal as a backup valid clock source device, and further determines the stability of the valid clock source device. When the clock slave device determines that the number of announce messages received from the valid clock source device within a set receiving period is no less than a set number, the clock slave device determines that the valid clock source device is a stable clock source device. By determining the stability, it is further determined whether the receiving and sending of an announce message from the valid clock source device are stable and whether the valid clock source device is a reliable clock source.

As to the example shown in Fig. 1, the clock slave device further determines whether the set number of announce messages are received from the clock source device 1 within the set receiving period; for example, if two announce messages are received within four consecutive announce message sending cycles, then the clock source device is deemed to be a stable clock source device. Assuming that the clock slave device receives multiple announce messages, the number of which is no less than a set number, from the clock source device 1, for example, the clock slave device receives 3 announce messages, the number of which is more than a set number 2, then the clock source device 1 is deemed to be a stable valid clock source device.

Step 106: The valid source device is not added into a list of backup clock source devices, and the flow terminates.

When the valid clock source device fails to pass the stability test, and is determined to be an unstable clock source device, the valid clock source device may be excluded from the list of backup clock source devices, and is no longer an option for the clock slave device when the clock slave device performs clock source switching.

As to the example shown in Fig. 1, for the clock source device 2, although the clock slave device also receives an announce message from the clock source device 2, however as the clock slave device does not receive any detection feedback message fed back by the clock source device 2, the clock source device 2 is not taken as a valid clock source device, no stability test over clock source device 2 is performed, and the clock source device 2 is also not added into the list of backup clock source devices.

Step 107: the clock slave device adds the valid clock source device determined to be stable into the list of backup clock source devices.

when the clock slave device determines that the number of announce messages received from the valid clock source device within a set receiving period is no less than a set number, the clock slave device determines that the valid clock source device is a stable clock source device, then determines a priority of the valid clock source device according to a set priority algorithm, and adds the valid clock source device into the list of backup clock source devices according to the priority. When the valid clock source device is determined to be a stable clock source device, i.e., a reliable time source, the valid clock source device may be taken as a backup clock source device to be selected by the clock slave device when the clock slave device performs a clock source switching.

As to the example shown in Fig. 1, the priority of the valid clock source device, i.e., the clock source device 1 is determined using the BMC, and a valid clock source device is added into the list of backup clock source devices according to the priority.

Step 108: When the clock slave device needs to switch to a new clock source device, the clock slave device selects the new clock source device from the list of backup clock source devices.

When the clock slave device needs to select and switch to a clock source device, the clock slave device may select, according to the priority, and switch to a clock source device having the highest priority from the list of backup clock source devices.

In this case, each clock source device in the list of backup clock source devices is a clock source device with a normal uplink and a normal downlink, therefore no clock source device with an impeded uplink which cannot be connected normally will be selected.

With the method, when both the uplink and downlink between the clock slave device and the clock source device 1 work fine while only the downlink between the clock slave device and the clock source device 2 works, the clock slave device will not select the clock source device 2, as the clock slave device cannot receive a detection feedback message from the clock source device 2. If the clock source used currently by the clock slave device is the clock source device 2, then the clock slave device will select the clock source device 1 as the clock source, and switch to the clock source device 1. If the clock source used currently by the clock slave device is the clock source device 1, then no switching will occur. Even if it is determined according to the stability and the BMC that the priority of the clock source device 2 is higher, the clock slave device will not select and switch to the clock source device 2 as the clock source, because the link of the clock source device 2 works only in one direction at the moment, which may lead to that the clock slave device cannot be synchronized with the clock source.

Based on the method for clock source device selecting and switching provided by an embodiment of the disclosure, another embodiment of the disclosure further provides a system for clock source device selecting and switching, a structure of which is as shown in Fig. 1. The system includes a clock slave device and a clock source device. Wherein, multiple clock slave devices or clock source devices may be set as needed.

The clock slave device is configured to, when the clock slave device receives an announce message from the clock source device, send a link detection message to the clock source device; when the clock slave device receives a detection feedback message fed back by the clock source device according to the link detection message, determine that the clock source device is a valid clock source device; when the clock slave device determines that the valid clock source device is stable, add the valid clock source device into a list of backup clock source devices; and when the clock slave device needs to switch to a new clock source device, select the new clock source device from the list of backup clock source devices.

The clock source device is configured to, when the clock source device receives the link detection message from the clock slave device, send the detection feedback message to the clock slave device.

Preferably, the clock slave device is specifically configured to, when the clock slave device receives the announce message from the clock source device for the first time, begin to send the link detection message to the clock source device in a unicast or multicast mode according to a set detection period, wherein the sent link detection message includes address information of the clock slave device and address information of the clock source device.

Preferably, the clock source device is specifically configured to, when the clock source device receives the link detection message from the clock slave device and determining, according to address information of the clock source device included in the link detection message, that the link detection message is a link detection message directed to the clock source device itself, send the detection feedback message to the clock slave device corresponding to address information of the clock slave device included in the link detection message, wherein the sent detection feedback message includes the address information of the clock slave device and the address information of the clock source device.

Correspondingly, the clock slave device is specifically configured to, when the clock slave device receives the detection feedback message, and when the address information of the clock slave device and the address information of the clock source device included in the detection feedback message matches the address information of the clock slave device and the address information of the clock source device in the link detection message sent by the clock slave device itself, determine that the clock source device is the valid clock source device.

Preferably, the clock slave device is specifically configured to, when the clock slave device determines that a number of announce messages received from the valid clock source device within a set receiving period is no less than a set number, determine that the valid clock source device is a stable clock source device; and determine a priority of the valid clock source device according to a set priority algorithm, and add the valid clock source device into the list of backup clock source devices according to the priority, such that selection may be made according to the priority when a clock source device is selected subsequently.

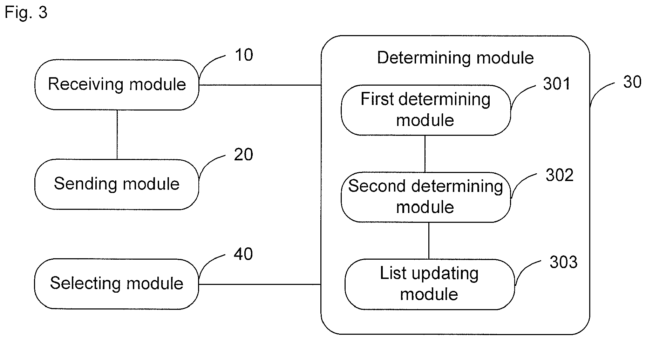

Based on the system for clock source device selecting and switching provided by an embodiment of the disclosure, another embodiment of the disclosure further provides a clock device, which may serve as either a clock slave device or a clock master device. A structure of the clock device is as shown in Fig. 3.

When the clock device shown in Fig. 3 serves as a clock slave device, the clock device includes: a receiving module 10, a sending module 20, a determining module 30, and a selecting module 40.

The receiving module 10 is configured to receive an announce message from a clock source device, and receive a detection feedback message fed back by the clock source device according to a link detection message.

The sending module 20 is configured to, when the announce message is received, send the link detection message to the clock source device.

The determining module 30 is configured to, when the detection feedback message is received, determine that the clock source device is a valid clock source device; determine whether the valid clock source device is a stable clock source device; and when it is determined that the valid clock source device is stable, add the valid clock source device into a list of backup clock source devices.

The selecting module 40 is configured to, when switching to a new clock source device is needed, select the new clock source device from the list of backup clock source devices.

Preferably, the sending module 20 is specifically configured to, when the receiving module 10 receives the announce message from the clock source device for the first time, begin to send the link detection message to the clock source device in a unicast or multicast mode according to a set detection period, wherein the sent link detection message includes address information of the clock slave device and address information of the clock source device.

Preferably, the determining module 30 specifically includes: a first determining unit 301, a second determining unit 302, and a list updating unit 303.

The first determining unit 301 is configured to, when the detection feedback message is received and when the address information of the clock slave device and the address information of the clock source device included in the detection feedback message matches the address information of the clock slave device and the address information of the clock source device in the link detection message sent by the clock slave device itself, determine that the clock source device is the valid clock source device.

The second determining unit 302 is configured to, when it is determined that the number of announce messages received from the valid clock source device within a set receiving period is no less than a set number, determine that the valid clock source device is a stable clock source device; and

The list updating unit 303 is configured to, when the second determining unit 302 determines that the valid clock source device is a stable clock source device, determine a priority of the valid clock source device according to a set priority algorithm, and add the valid clock source device into the list of backup clock source devices according to the priority.

When the clock device shown in Fig. 3 serves as a clock source device, the clock device includes a receiving module 10 and a sending module 20.

Wherein, the receiving module 10 is configured to receive a detection feedback message from a clock slave device.

Wherein, the sending module 20 is configured to send an announce message to the clock slave device, and when the receiving module 10 receives the link detection message from the clock slave device, send a detection feedback message to the clock slave device. The sending module 20 is specifically configured to, when the receiving module 10 receives the link detection message from the clock slave device and determines, according to address information of the clock source device included in the link detection message, that the link detection message is a link detection message directed to the clock source device where the receiving module 10 is located, send the detection feedback message to the clock slave device corresponding to address information of the clock slave device included in the link detection message, wherein the sent detection feedback message includes the address information of the clock slave device and the address information of the clock source device.

In the method, device, and system for clock source device selecting and switching provided by the embodiments of the disclosure, when a clock slave device receives an announce message from a clock source device, the clock slave device may send a link detection message to the clock source device to detect whether the uplink is normal. Only when it is determined, according to a detection feedback message returned by the clock source device, that the uplink communication is normal, the clock source device will be taken as a valid clock source device; and after it is further determined that the downlink communication is stable, the valid clock source device may be taken as a backup clock source device to be selected and switched to. If the detection feedback message returned by the clock source device cannot be received correctly, then it can be known that the uplink is impeded and that the clock source device cannot serve as a clock source. It is ensured by means of handshake and through a link detection-feedback mechanism that both the uplink and the downlink between a clock source device and a clock slave device are normal, thus avoiding a clock source device with an impeded link being selected and avoiding affecting the normal clock synchronization of the clock slave device.

Furthermore, such detection does not require a high frequency, and therefore will not bring about a lot of extra expense of the network bandwidth; and with minimal resource expense, it can be ensured that in case of an abnormal condition such as a unidirectional link and the like in the network, the clock slave device is able to correctly select a master device or select another synchronization mode without a direct result of a wrong choice of a time source, thus ensuring proper synchronization of the clock slave device.

The above description illustrates and describes a preferable embodiment of the disclosure. However, as previously mentioned, it should be understood that the disclosure is not restricted to the form disclosed by the present document, which should not be regarded as exclusion of other embodiments, but can be applied to various other combinations, modifications and contexts, and can be modified through the above teaching or technology or knowledge in a related field within the scope of conception of the disclosure described herein.

## Claims

1. A method for clock source device selecting and switching, comprising:
when a clock slave device receives an announce message from a clock source device, sending, by the clock slave device, a link detection message to the clock source device (S102);
when the clock slave device receives a detection feedback message fed back by the clock source device according to the link detection message, determining, by the clock slave device, that the clock source device is a valid clock source device (S104);
determining, by the clock slave device, whether the valid clock source device is a stable clock source device (S105), and when it is determined that the valid clock source device is stable, adding, by the clock slave device, the valid clock source device into a list of backup clock source devices (S107); and
when the clock slave device needs to switch to a new clock source device, selecting, by the clock slave device, the new clock source device from the list of backup clock source devices (S108);
wherein the clock source device uses a Precision Time Protocol, and the clock slave device uses the Precision Time Protocol.

2. The method according to claim 1, wherein the step of when a clock slave device receives an announce message from a clock source device, sending, by the clock slave device, a link detection message to the clock source device comprises:
when the clock slave device receives the announce message from the clock source device for a first time, sending, by the clock slave device, the link detection message to the clock source device in a unicast or multicast mode according to a set detection period, wherein the link detection message includes address information of the clock slave device and address information of the clock source device.

3. The method according to claim 1, wherein the step of when the clock slave device receives a detection feedback message fed back by the clock source device according to the link detection message, determining, by the clock slave device, that the clock source device is a valid clock source device comprises:
when the clock source device receives the link detection message from the clock slave device and determines, according to address information of the clock source device included in the link detection message, that the link detection message is a link detection message directed to the clock source device, sending, by the clock source device, the detection feedback message to the clock slave device corresponding to address information of the clock slave device included in the link detection message, wherein the detection feedback message includes the address information of the clock slave device and the address information of the clock source device; and
when the clock slave device receives the detection feedback message, and when the address information of the clock slave device and the address information of the clock source device included in the detection feedback message matches the address information of the clock slave device and the address information of the clock source device in the link detection message sent by the clock slave device, determining, by the clock slave device, that the clock source device is the valid clock source device.

4. The method according to claim 1, wherein the step of determining, by the clock slave device, whether the valid clock source device is a stable clock source device, and when it is determined that the valid clock source device is stable, adding, by the clock slave device, the valid clock source device into a list of backup clock source devices comprises:
when the clock slave device determines that a number of announce messages received from the valid clock source device within a set receiving period is no less than a set number, determining, by the clock slave device, that the valid clock source device is a stable clock source device; and
determining, by the clock slave device, a priority of the valid clock source device according to a set priority algorithm, and adding, by the clock slave device, the valid clock source device into the list of backup clock source devices according to the priority.

5. A clock slave device, comprising: a receiving module (10), a sending module (20), a determining module (30), and a selecting module (40), wherein
the receiving module (10) is configured to receive an announce message from a clock source device, and receive a detection feedback message fed back by the clock source device according to a link detection message;
the sending module (20) is configured to, when the announce message is received, send the link detection message to the clock source device;
the determining module (30) is configured to, when the detection feedback message is received, determine that the clock source device is a valid clock source device; and when it is determined that the valid clock source device is stable, add the valid clock source device into a list of backup clock source devices; and
the selecting module (40) is configured to, when switching to a new clock source device is needed, select the new clock source device from the list of backup clock source devices;
wherein the clock source device uses a Precision Time Protocol, and the clock slave device uses the Precision Time Protocol.

6. The clock device according to claim 5, wherein the determining module (30) comprises:
a first determining unit (301) configured to, when the detection feedback message is received and when the address information of the clock slave device and the address information of the clock source device included in the detection feedback message matches the address information of the clock slave device and the address information of the clock source device in the link detection message sent by the clock slave device, determine that the clock source device is the valid clock source device; and
a second determining unit (302) configured to, when determining that a number of announce messages received from the valid clock source device within a set receiving period is no less than a set number, determine that the valid clock source device is a stable clock source device; and
a list updating unit (303) configured to, when the second determining unit determines that the valid clock source device is a stable clock source device, determine a priority of the valid clock source device according to a set priority algorithm, and add the valid clock source device into the list of backup clock source devices according to the priority.

7. A clock source device, comprising: a receiving module (10) and a sending module (20), wherein
the receiving module (10) is configured to receive a link detection message from a clock slave device; and
the sending module (20) is configured to send an announce message to the clock slave device, and when the receiving module receives the link detection message from the clock slave device, send a detection feedback message to the clock slave device; wherein the clock source device uses a Precision Time Protocol, and the clock slave device uses the Precision Time Protocol.

8. A system for clock source device selecting and switching, comprising a clock slave device according to claim 5 and a clock source device according to claim 7.

9. A method for clock source device selecting and switching, comprising:
sending an announce message from a clock source device to a clock slave device (S101); and
when the clock source device receives a link detection message from the clock slave device, sending, by the clock source device, a detection feedback message to the clock slave device (S103);
wherein the clock source device uses a Precision Time Protocol, and the clock slave device uses the Precision Time Protocol.

10. A computer program product for clock slave device selecting and switching, the computer program product comprising computer readable code comprising instructions, which when executed by a a processor, cause the processor to perform the steps of:
when a clock slave device receives an announce message from a clock source device, sending, by the clock slave device, a link detection message to the clock source device;
when the clock slave device receives a detection feedback message fed back by the clock source device according to the link detection message, determining, by the clock slave device, that the clock source device is a valid clock source device;
determining, by the clock slave device, whether the valid clock source device is a stable clock source device, and when it is determined that the valid clock source device is stable, adding, by the clock slave device, the valid clock source device into a list of backup clock source devices; and
when the clock slave device needs to switch to a new clock source device, selecting, by the clock slave device, the new clock source device from the list of backup clock source devices;
wherein the clock source device uses a Precision Time Protocol, and the clock slave device uses the Precision Time Protocol.

11. A computer program product for clock source device selecting and switching, the computer program product comprising computer readable code comprising instructions, which when executed by a a processor, cause the processor to perform the steps of:
sending an announce message from a clock source device to a clock slave device; and
when the clock source device receives a link detection message from the clock slave device, sending, by the clock source device, a detection feedback message to the clock slave device;
wherein the clock source device uses a Precision Time Protocol, and the clock slave device uses the Precision Time Protocol.

## Patentansprüche

1. Verfahren zum Auswählen und Umschalten einer Taktquellenvorrichtung, umfassend:
wenn eine Takt-Slave-Vorrichtung von einer Taktquellenvorrichtung eine Ankündigungsnachricht empfängt, Senden, durch die Takt-Slave-Vorrichtung, einer Verbindungserfassungsnachricht an die Taktquellenvorrichtung (S102);
wenn die Takt-Slave-Vorrichtung eine Erfassungsrückmeldungsnachricht empfängt, die von der Taktquellenvorrichtung gemäß der Verbindungserfassungsnachricht rückgemeldet wird, Bestimmen, durch die Takt-Slave-Vorrichtung, dass die Taktquellenvorrichtung eine gültige Taktquellenvorrichtung ist (S104);
Bestimmen, durch die Takt-Slave-Vorrichtung, ob die gültige Taktquellenvorrichtung eine stabile Taktquellenvorrichtung ist (S 105), und wenn es bestimmt wird, dass die gültige Taktquellenvorrichtung stabil ist, Hinzufügen, durch die Takt-Slave-Vorrichtung, der gültigen Taktquellenvorrichtung in eine Liste von Backup-Taktquellenvorrichtungen (S107); und
wenn die Takt-Slave-Vorrichtung zu einer neuen Taktquellenvorrichtung umschalten muss, Auswählen, durch die Takt-Slave-Vorrichtung, der neuen Taktquellenvorrichtung aus der Liste von Backup-Taktquellenvorrichtungen (S108);
worin die Taktquellenvorrichtung ein Präzisionszeitprotokoll benutzt und die Takt-Slave-Vorrichtung das Präzisionszeitprotokoll benutzt.

2. Verfahren nach Anspruch 1, worin der Schritt, wenn eine Takt-Slave-Vorrichtung von einer Taktquellenvorrichtung eine Ankündigungsnachricht empfängt, des Sendens, durch die Takt-Slave-Vorrichtung, einer Verbindungserfassungsnachricht an die Taktquellenvorrichtung, umfasst:
wenn die Takt-Slave-Vorrichtung von der Taktquellenvorrichtung die Ankündigungsnachricht zum ersten Mal empfängt, Senden, durch die Takt-Slave-Vorrichtung, der Verbindungserfassungsnachricht an die Taktquellenvorrichtung in einem Unicast- oder Multicast-Modus gemäß einem festgelegten Erfassungszeitraum, worin die Verbindungserfassungsnachricht Adresseninformationen der Takt-Slave-Vorrichtung und Adresseninformationen der Taktquellenvorrichtung umfasst.

3. Verfahren nach Anspruch 1, worin der Schritt, wenn die Takt-Slave-Vorrichtung eine Erfassungsrückmeldungsnachricht empfängt, die von der Taktquellenvorrichtung gemäß der Verbindungserfassungsnachricht rückgemeldet wird, des Bestimmens, durch die Takt-Slave-Vorrichtung, dass die Taktquellenvorrichtung eine gültige Taktquellenvorrichtung ist, umfasst:
wenn die Taktquellenvorrichtung von der Takt-Slave-Vorrichtung die Verbindungserfassungsnachricht empfängt und, gemäß den Adresseninformationen der Taktquellenvorrichtung, die in der Verbindungserfassungsnachricht umfasst sind, bestimmt, dass die Verbindungserfassungsnachricht eine Verbindungserfassungsnachricht ist, die auf die Taktquellenvorrichtung gerichtet ist, Senden, durch die Taktquellenvorrichtung, der Erfassungsrückmeldungsnachricht an die Takt-Slave-Vorrichtung, die den Adresseninformationen der Takt-Slave-Vorrichtung entspricht, die in der Verbindungserfassungsnachricht umfasst sind, worin die Erfassungsrückmeldungsnachricht die Adresseninformationen der Takt-Slave-Vorrichtung und die Adresseninformationen der Taktquellenvorrichtung umfasst; und
wenn die Takt-Slave-Vorrichtung die Erfassungsrückmeldungsnachricht empfängt, und wenn die Adresseninformationen der Takt-Slave-Vorrichtung und die Adresseninformationen der Taktquellenvorrichtung, die in der Erfassungsrückmeldungsnachricht umfasst sind, zu den Adresseninformationen der Takt-Slave-Vorrichtung und zu den Adresseninformationen der Taktquellenvorrichtung in der Verbindungserfassungsnachricht passen, die von der Takt-Slave-Vorrichtung gesandt wird, Bestimmen, durch die Takt-Slave-Vorrichtung, dass die Taktquellenvorrichtung die gültige Taktquellenvorrichtung ist.

4. Verfahren nach Anspruch 1, worin der Schritt des Bestimmens, durch die Takt-Slave-Vorrichtung, ob die gültige Taktquellenvorrichtung eine stabile Taktquellenvorrichtung ist, und wenn es bestimmt wird, dass die gültige Taktquellenvorrichtung stabil ist, Hinzufügen, durch die Takt-Slave-Vorrichtung, der gültigen Taktquellenvorrichtung in eine Liste von Backup-Taktquellenvorrichtungen, umfasst:
wenn die Takt-Slave-Vorrichtung bestimmt, dass eine Anzahl von Ankündigungsnachrichten, die von der gültigen Taktquellenvorrichtung innerhalb eines festgelegten Empfangszeitraums empfangen werden, nicht geringer als eine festgelegte Anzahl ist, Bestimmen, durch die Takt-Slave-Vorrichtung, dass die gültige Taktquellenvorrichtung eine stabile Taktquellenvorrichtung ist; und
Bestimmen, durch die Takt-Slave-Vorrichtung, einer Priorität der gültigen Taktquellenvorrichtung gemäß einem festgelegten Prioritätsalgorithmus, und Hinzufügen, durch die Takt-Slave-Vorrichtung, der gültigen Taktquellenvorrichtung in die Liste von Backup-Taktquellenvorrichtungen gemäß der Priorität.

5. Takt-Slave-Vorrichtung, umfassend: ein Empfangsmodul (10), ein Sendemodul (20), ein Bestimmungsmodul (30) und ein Auswählmodul (40), worin
das Empfangsmodul (10) dazu eingerichtet ist, von einer Taktquellenvorrichtung eine Ankündigungsnachricht zu empfangen und eine Erfassungsrückmeldungsnachricht, die von der Taktquellenvorrichtung gemäß einer Verbindungserfassungsnachricht rückgemeldet wird, zu empfangen;
das Sendemodul (20) dazu eingerichtet ist, wenn die Ankündigungsnachricht empfangen wird, die Verbindungserfassungsnachricht an die Taktquellenvorrichtung zu senden;
das Bestimmungsmodul (30) dazu eingerichtet ist, wenn die Erfassungsrückmeldungsnachricht empfangen wird, zu bestimmen, dass die Taktquellenvorrichtung eine gültige Taktquellenvorrichtung ist; und wenn es bestimmt wird, dass die gültige Taktquellenvorrichtung stabil ist, die gültige Taktquellenvorrichtung in eine Liste von Backup-Taktquellenvorrichtungen hinzuzufügen; und
das Auswählmodul (40) dazu eingerichtet ist, wenn das Umschalten zu einer neuen Taktquellenvorrichtung benötigt wird, die neue Taktquellenvorrichtung aus der Liste von Backup-Taktquellenvorrichtungen auszuwählen;
worin die Taktquellenvorrichtung ein Präzisionszeitprotokoll benutzt und die Takt-Slave-Vorrichtung das Präzisionszeitprotokoll benutzt.

6. Taktvorrichtung nach Anspruch 5, worin das Bestimmungsmodul (30) umfasst:
eine erste Bestimmungseinheit (301), die dazu eingerichtet ist, wenn die Erfassungsrückmeldungsnachricht empfangen wird, und wenn die Adresseninformationen der Takt-Slave-Vorrichtung und die Adresseninformationen der Taktquellenvorrichtung, die in der Erfassungsrückmeldungsnachricht umfasst sind, zu den Adresseninformationen der Takt-Slave-Vorrichtung und zu den Adresseninformationen der Taktquellenvorrichtung in der Verbindungserfassungsnachricht passen, die von der Takt-Slave-Vorrichtung gesandt wird, zu bestimmen, dass die Taktquellenvorrichtung die gültige Taktquellenvorrichtung ist; und
eine zweite Bestimmungseinheit (302), die dazu eingerichtet ist, wenn es bestimmt wird, dass eine Anzahl von Ankündigungsnachrichten, die von der gültigen Taktquellenvorrichtung innerhalb eines festgelegten Empfangszeitraums empfangen werden, nicht geringer als eine festgelegte Anzahl ist, zu bestimmen, dass die gültige Taktquellenvorrichtung eine stabile Taktquellenvorrichtung ist; und
eine Listenaktualisierungseinheit (303), die dazu eingerichtet ist, wenn die zweite Bestimmungseinheit bestimmt, dass die gültige Taktquellenvorrichtung eine stabile Taktquellenvorrichtung ist, eine Priorität der gültigen Taktquellenvorrichtung gemäß einem festgelegten Prioritätsalgorithmus zu bestimmen und die gültige Taktquellenvorrichtung in die Liste von Backup-Taktquellenvorrichtungen gemäß der Priorität hinzuzufügen.

7. Taktquellenvorrichtung, umfassend: ein Empfangsmodul (10) und ein Sendemodul (20), worin
das Empfangsmodul (10) dazu eingerichtet ist, von einer Takt-Slave-Vorrichtung eine Verbindungserfassungsnachricht zu empfangen; und
das Sendemodul (20) dazu eingerichtet ist, an die Takt-Slave-Vorrichtung eine Ankündigungsnachricht zu senden, und wenn das Empfangsmodul von der Takt-Slave-Vorrichtung die Verbindungserfassungsnachricht empfängt, an die Takt-Slave-Vorrichtung eine Erfassungsrückmeldungsnachricht zu senden; worin die Taktquellenvorrichtung ein Präzisionszeitprotokoll benutzt und die Takt-Slave-Vorrichtung das Präzisionszeitprotokoll benutzt.

8. System zum Auswählen und Umschalten einer Taktquellenvorrichtung, umfassend eine Takt-Slave-Vorrichtung nach Anspruch 5 und eine Taktquellenvorrichtung nach Anspruch 7.

9. Verfahren zum Auswählen und Umschalten einer Taktquellenvorrichtung, umfassend:
Senden einer Ankündigungsnachricht von einer Taktquellenvorrichtung an eine Takt-Slave-Vorrichtung (S101); und
wenn die Taktquellenvorrichtung von der Takt-Slave-Vorrichtung eine Verbindungserfassungsnachricht empfängt, Senden, durch die Taktquellenvorrichtung, einer Erfassungsrückmeldungsnachricht an die Takt-Slave-Vorrichtung (S103);
worin die Taktquellenvorrichtung ein Präzisionszeitprotokoll benutzt und die Takt-Slave-Vorrichtung das Präzisionszeitprotokoll benutzt.

10. Computerprogrammprodukt zum Auswählen und Umschalten einer Takt-Slave-Vorrichtung, wobei das Computerprogrammprodukt einen vom Computer lesbaren Code umfasst, der Anweisungen enthält, die, wenn sie von einem Prozessor ausgeführt werden, den Prozessor veranlassen, folgende Schritte durchzuführen:
wenn eine Takt-Slave-Vorrichtung von einer Taktquellenvorrichtung eine Ankündigungsnachricht empfängt, Senden, durch die Takt-Slave-Vorrichtung, einer Verbindungserfassungsnachricht an die Taktquellenvorrichtung;
wenn die Takt-Slave-Vorrichtung eine Erfassungsrückmeldungsnachricht empfängt, die von der Taktquellenvorrichtung gemäß der Verbindungserfassungsnachricht rückgemeldet wird, Bestimmen, durch die Takt-Slave-Vorrichtung, dass die Taktquellenvorrichtung eine gültige Taktquellenvorrichtung ist;
Bestimmen, durch die Takt-Slave-Vorrichtung, ob die gültige Taktquellenvorrichtung eine stabile Taktquellenvorrichtung ist, und wenn es bestimmt wird, dass die gültige Taktquellenvorrichtung stabil ist, Hinzufügen, durch die Takt-Slave-Vorrichtung, der gültigen Taktquellenvorrichtung in eine Liste von Backup-Taktquellenvorrichtungen; und
wenn die Takt-Slave-Vorrichtung zu einer neuen Taktquellenvorrichtung umschalten muss, Auswählen, durch die Takt-Slave-Vorrichtung, der neuen Taktquellenvorrichtung aus der Liste von Backup-Taktquellenvorrichtungen;
worin die Taktquellenvorrichtung ein Präzisionszeitprotokoll benutzt und die Takt-Slave-Vorrichtung das Präzisionszeitprotokoll benutzt.

11. Computerprogrammprodukt zum Auswählen und Umschalten einer Taktquellenvorrichtung, wobei das Computerprogrammprodukt einen vom Computer lesbaren Code umfasst, der Anweisungen enthält, die, wenn sie von einem Prozessor ausgeführt werden, den Prozessor veranlassen, folgende Schritte durchzuführen:
Senden einer Ankündigungsnachricht von einer Taktquellenvorrichtung an eine Takt-Slave-Vorrichtung; und
wenn die Taktquellenvorrichtung von der Takt-Slave-Vorrichtung eine Verbindungserfassungsnachricht empfängt, Senden, durch die Taktquellenvorrichtung, einer Erfassungsrückmeldungsnachricht an die Takt-Slave-Vorrichtung;
worin die Taktquellenvorrichtung ein Präzisionszeitprotokoll benutzt und die Takt-Slave-Vorrichtung das Präzisionszeitprotokoll benutzt.

## Revendications

1. Méthode de sélection et de commutation d'un dispositif source d'horloge, comprenant :
lorsqu'un dispositif esclave d'horloge reçoit un message d'annonce d'un dispositif source d'horloge, l'envoi, par le dispositif esclave d'horloge, d'un message de détection de liaison au dispositif source d'horloge (S 102) ;
lorsque le dispositif esclave d'horloge reçoit un message de rétroaction de détection renvoyé par le dispositif source d'horloge conformément au message de détection de liaison, la détermination, par le dispositif esclave d'horloge, que le dispositif source d'horloge est un dispositif source d'horloge valide (S 104) ;
la détermination, par le dispositif esclave d'horloge, si le dispositif source d'horloge valide est un dispositif source d'horloge stable (S 105), et lorsqu'on a déterminé que le dispositif source d'horloge valide est stable, l'ajout, par le dispositif esclave d'horloge, du dispositif source d'horloge valide dans une liste de dispositifs source d'horloge de sauvegarde (S 107) ; et
lorsque le dispositif esclave d'horloge doit passer à un nouveau dispositif source d'horloge, la sélectionne, par le dispositif esclave d'horloge, du nouveau dispositif source d'horloge de la liste des dispositifs source d'horloge de sauvegarde (S 108) ;
où le dispositif source d'horloge utilise un protocole de précision temporelle, et le dispositif esclave d'horloge utilise le protocole de précision temporelle.

2. Méthode selon la revendication 1, où, lorsqu'un dispositif esclave d'horloge reçoit un message d'annonce d'un dispositif source d'horloge, l'étape d'envoyer, par le dispositif esclave d'horloge, un message de détection de liaison au dispositif source d'horloge comprend :
lorsque le dispositif esclave d'horloge reçoit le message d'annonce du dispositif source d'horloge pour une première fois, l'envoi, par le dispositif esclave d'horloge, du message de détection de liaison au dispositif source d'horloge en mode de monodiffusion ou de multidiffusion selon une période de détection définie, où le message de détection de liaison comprend des informations d'adresse du dispositif esclave d'horloge et des informations d'adresse du dispositif source d'horloge.

3. Méthode selon la revendication 1, où, lorsque le dispositif esclave d'horloge reçoit un message de rétroaction de détection renvoyé par le dispositif source d'horloge conformément au message de détection de liaison, l'étape de déterminer, par le dispositif esclave d'horloge, que le dispositif source d'horloge est un dispositif source d'horloge valide comprend :
lorsque le dispositif source d'horloge reçoit le message de détection de liaison du dispositif esclave d'horloge et détermine, selon les informations d'adresse du dispositif source d'horloge comprises dans le message de détection de liaison, que le message de détection de liaison est un message de détection de liaison dirigé vers le dispositif source d'horloge, l'envoi, par le dispositif source d'horloge, du message de rétroaction de détection au dispositif esclave d'horloge correspondant aux informations d'adresse du dispositif esclave d'horloge comprises dans le message de détection de liaison, où le message de rétroaction de détection comprend les informations d'adresse du dispositif esclave d'horloge et les informations d'adresse du dispositif source d'horloge ; et
lorsque le dispositif esclave d'horloge reçoit le message de rétroaction de détection, et lorsque les informations d'adresse du dispositif esclave d'horloge et les informations d'adresse du dispositif source d'horloge comprises dans le message de rétroaction de détection correspondent aux informations d'adresse du dispositif esclave d'horloge et aux informations d'adresse du dispositif source d'horloge dans le message de détection de liaison envoyé par le dispositif esclave d'horloge, la détermination, par le dispositif esclave d'horloge, que le dispositif source d'horloge est le dispositif source d'horloge valide.

4. Méthode selon la revendication 1, où l'étape de déterminer, par le dispositif esclave d'horloge, si le dispositif source d'horloge valide est un dispositif source d'horloge stable, et lorsqu'on a déterminé que le dispositif source d'horloge valide est stable, ajouter, par le dispositif esclave d'horloge, le dispositif source d'horloge valide dans une liste de dispositifs source d'horloge de sauvegarde comprend :
lorsque le dispositif esclave d'horloge détermine qu'un nombre de messages d'annonce reçus du dispositif source d'horloge valide dans une période de réception définie n'est pas inférieur à un nombre défini, la détermination, par le dispositif esclave d'horloge, que le dispositif source d'horloge valide est un dispositif source d'horloge stable ; et
la détermination, par le dispositif esclave d'horloge, d'une priorité du dispositif source d'horloge valide selon un algorithme de priorité définie, et l'ajout, par le dispositif esclave d'horloge, du dispositif source d'horloge valide dans la liste des dispositifs source d'horloge de sauvegarde en fonction de la priorité.

5. Dispositif esclave d'horloge, comprenant : un module de réception (10), un module d'envoi (20), un module de détermination (30) et un module de sélection (40), où
le module de réception (10) est configuré pour recevoir un message d'annonce d'un dispositif source d'horloge, et recevoir un message de rétroaction de détection renvoyé par le dispositif source d'horloge conformément à un message de détection de liaison ;
le module d'envoi (20) est configuré pour, lorsque le message d'annonce est reçu, envoyer le message de détection de liaison au dispositif source d'horloge ;
le module de détermination (30) est configuré pour déterminer, lorsque le message de rétroaction de détection est reçu, que le dispositif source d'horloge est un dispositif source d'horloge valide ; et lorsqu'on a déterminé que le dispositif source d'horloge valide est stable, ajouter le dispositif source d'horloge valide dans une liste de dispositifs source d'horloge de sauvegarde ; et
le module de sélection (40) est configuré pour sélectionner, lorsqu'une commutation vers un nouveau dispositif source d'horloge est nécessaire, le nouveau dispositif source d'horloge dans la liste des dispositifs source d'horloge de sauvegarde ;
où le dispositif source d'horloge utilise un protocole de précision temporelle, et le dispositif esclave d'horloge utilise le protocole de précision temporelle.

6. Dispositif d'horloge selon la revendication 5, où le module de détermination (30) comprend :
une première unité de détermination (301) configuré pour déterminer, lorsque le message de rétroaction de détection est reçu et lorsque les informations d'adresse du dispositif esclave d'horloge et les informations d'adresse du dispositif source d'horloge comprises dans le message de rétroaction de détection correspondent aux informations d'adresse du dispositif esclave d'horloge et aux informations d'adresse du dispositif source d'horloge dans le message de détection de liaison envoyé par le dispositif esclave d'horloge, que le dispositif source d'horloge est le dispositif source d'horloge valide ; et
une deuxième unité de détermination (302) configuré pour déterminer, lorsque on détermine qu'un nombre de messages d'annonce reçus du dispositif source d'horloge valide dans une période de réception définie n'est pas inférieur à un nombre défini, que le dispositif source d'horloge valide est un dispositif source d'horloge stable ; et
une unité de mise à jour (303) des listes configurée pour déterminer, lorsque la deuxième unité de détermination détermine que le dispositif source d'horloge valide est un dispositif source d'horloge stable, une priorité du dispositif source d'horloge valide selon un algorithme de priorité défini et ajouter le dispositif source d'horloge valide dans la liste de dispositifs source d'horloge de sauvegarde en fonction de la priorité.

7. Dispositif source d'horloge, comprenant : un module de réception (10) et un module d'envoi (20), où
le module de réception (10) est configuré pour recevoir un message de détection de liaison d'un dispositif esclave d'horloge ; et
le module d'envoi (20) est configuré pour envoyer un message d'annonce au dispositif esclave d'horloge, et lorsque le module de réception reçoit le message de détection de liaison du dispositif esclave d'horloge, pour envoyer un message de rétroaction de détection au dispositif esclave d'horloge ; où le dispositif source d'horloge utilise un protocole de précision temporelle, et le dispositif esclave d'horloge utilise le protocole de précision temporelle.

8. Système pour sélectionner et commuter un dispositif source d'horloge, comprenant un dispositif esclave d'horloge selon la revendication 5 et un dispositif source d'horloge selon la revendication 7.

9. Méthode de sélection et de commutation d'un dispositif source d'horloge, comprenant :
l'envoi d'un message d'annonce d'un dispositif source d'horloge à un dispositif esclave d'horloge (S101) ; et
lorsque le dispositif source d'horloge reçoit un message de détection de liaison du dispositif d'horloge esclave, l'envoi, par le dispositif source d'horloge, d'un message de rétroaction de détection au dispositif esclave d'horloge (S 103) ;
où le dispositif source d'horloge utilise un protocole de précision temporelle, et le dispositif esclave d'horloge utilise le protocole de précision temporelle.

10. Programme informatique pour la sélection et la commutation d'un dispositif esclave d'horloge, le programme informatique comprenant un code lisible par ordinateur comprenant des instructions qui, lorsqu'elles sont exécutées par un processeur, amènent le processeur à exécuter les étapes suivantes :
lorsqu'un dispositif esclave d'horloge reçoit un message d'annonce d'un dispositif source d'horloge, l'envoi, par le dispositif esclave d'horloge, d'un message de détection de liaison au dispositif source d'horloge ;
lorsque le dispositif esclave d'horloge reçoit un message de rétroaction de détection renvoyé par le dispositif source d'horloge conformément au message de détection de liaison, la détermination, par le dispositif esclave d'horloge, que le dispositif source d'horloge est un dispositif source d'horloge valide ;
la détermination, par le dispositif esclave d'horloge, si le dispositif source d'horloge valide est un dispositif source d'horloge stable, et lorsqu'on a déterminé que le dispositif source d'horloge valide est stable, l'ajout, par le dispositif esclave d'horloge, du dispositif source d'horloge valide dans une liste de dispositifs source d'horloge de sauvegarde ; et
lorsque le dispositif esclave d'horloge doit passer à un nouveau dispositif source d'horloge, la sélectionne, par le dispositif esclave d'horloge, du nouveau dispositif source d'horloge de la liste des dispositifs source d'horloge de sauvegarde ;
où le dispositif source d'horloge utilise un protocole de précision temporelle, et le dispositif esclave d'horloge utilise le protocole de précision temporelle.

11. Programme informatique pour la sélection et la commutation d'un dispositif source d'horloge, le programme informatique comprenant un code lisible par ordinateur comprenant des instructions qui, lorsqu'elles sont exécutées par un processeur, amènent le processeur à exécuter les étapes suivantes :
l'envoi d'un message d'annonce d'un dispositif source d'horloge à un dispositif esclave d'horloge ; et
lorsque le dispositif source d'horloge reçoit un message de détection de liaison du dispositif d'horloge esclave, l'envoi, par le dispositif source d'horloge, d'un message de rétroaction de détection au dispositif esclave d'horloge ;
où le dispositif source d'horloge utilise un protocole de précision temporelle, et le dispositif esclave d'horloge utilise le protocole de précision temporelle.
